# EUROPEAN PATENT SPECIFICATION

(11) **EP 1 474 860 B1**
(45) Date of publication and mention of the grant of the patent: **31.01.2007**
(21) Application number: 02793434.8
(22) Date of filing: 27.12.2002
(51) Int. Cl.: H02K 21/24, H02K 16/02

(54) **ELECTRIC ROTATING MACHINE**
ELEKTRISCHE DREHMASCHINE
MACHINE ELECTRIQUE ROTATIVE

(30) Priority: 12.02.2002 JP 2002033738
(43) Date of publication of application: 10.11.2004
(73) Proprietor: NISSAN MOTOR COMPANY, LIMITED, Yokohama-shi, Kanagawa 221-0023 (JP)
(72) Inventor: FURUSE, Hisayuki, Yokosuka-shi, Kanagawa 238-0032 (JP); NAKANO, Masaki, Yokohama-shi, Kanagawa 245-0017 (JP)
(74) Representative: Grünecker, Kinkeldey, Stockmair & Schwanhäusser Anwaltssozietät
(86) International application number: PCT/JP2002/013738
(87) International publication number: WO 2003/069763

(56) References cited:
- EP-A- 0 945 963
- WO-A-00/64035
- WO-A-99/39426
- GB-A- 2 360 140
- US-A- 4 605 874
- US-A- 5 245 238
- US-A- 5 334 898
- US-A- 6 114 784

## Description

The present invention relates to an electric rotating machine according to the preamble part of independent claim 1.

US 6,114,784, corresponding to Japanese Patent Application First Publication No. 2000-14086, discloses a multi-layer motor including a cylindrical stator and two cylindrical rotors which are disposed inside and outside the stator. The stator and the inner and outer rotors form a three-layered structure. The stator is supplied with compound current for separately driving the inner and outer rotors. The inner and outer rotors are independently operated by controlling the compound current, thereby enabling separate rotation outputs from the inner and outer rotors, respectively.

However, since the stator of the motor of the related art is disposed between the rotors in radially opposed manner, a cooling construction for the stator becomes complicated, in which there are provided a plurality of cooling passages extending along opposed axial ends and a circumferential periphery of the stator. This will lead to poor cooling efficiency of the stator and increase in production cost of the motor.

WO 99/39426 discloses an electric rotating machine comprising a first rotor including a first magnet and a second rotor including a second magnet. The second rotor is disposed concentrically with the first rotor, so that the rotors define a common axis, wherein the second magnet is radially offset from the first magnet. A stator comprising a radially outer portion and a radially inner portion is disposed concentrically with the first and second rotors.

WO 00/64035 discloses an axial air gap brushless motor having a stator body equipped with slots for receiving stator coils and a disk-shaped rotor.

EP 0 945 963 B1 discloses a motor/generator, wherein two rotors and one stator are arranged co-axially in three layers.

It is an objective of the present invention to improve the way of distributing the magnetic flux towards the inner and outer rotors so as to improve the efficiency of the electric rotating machine.

According to the present invention, said objective is solved by an electric rotating machine having the combination of the features of claim 1.

Preferred embodiments of the present invention are laid down in the subclaims.

In the following, the present invention is explained in greater detail by means of several embodiments thereof in conjunction with the accompanying drawings, wherein:
Fig. 1 is a vertical cross-section of an electric rotating machine according to a first embodiment;
Fig. 2 is a cross-sectional view taken along line 2-2 of Fig. 1, showing a stator bracket of a stator used in the electric rotating machine of the first embodiment;
Fig. 3 is a cross-sectional view of the stator bracket, taken along line 3-3 of Fig. 2;
Fig. 4 is a cross-sectional view taken along line 4-4 of Fig. 1, showing the stator; and
Fig. 5 is a vertical cross-section similar to Fig. 1, but showing a second embodiment of the electric rotating machine.

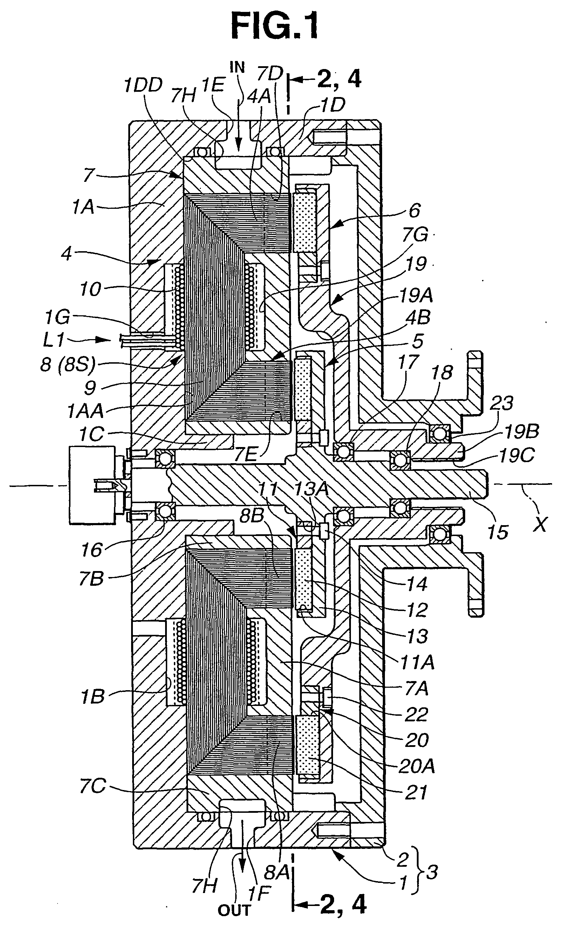

Referring now to Figs. 1 to 4, a first embodiment of an electric rotating machine is explained. As illustrated in Fig. 1, the electric rotating machine includes casing 3 constituted of casing body 1 and end cover 2. Stator 4, first rotor 5 and second rotor 6 are disposed within casing 3. Rotors 5 and 6 have common axis X about which rotors 5 and 6 are rotatable. Rotors 5 and 6 have generally disk shapes and diameters different from each other. Rotors 5 and 6 include magnets 12 and 21, respectively. Magnet 12 of rotor 5 and magnet 21 of rotor 6 are radially offset from each other. Stator 4 is arranged concentrically with rotors 5 and 6 and axially opposed thereto. Stator 4 includes radially outer portion 4A axially opposed to magnet 21 of rotor 6 and radially inner portion 4B axially opposed to magnet 12 of rotor 5. Radially outer portion 4A and radially inner portion 4B are magnetically operative to associate with magnet 21 of rotor 6 and magnet 12 of rotor 5, respectively, when stator 4 is energized.

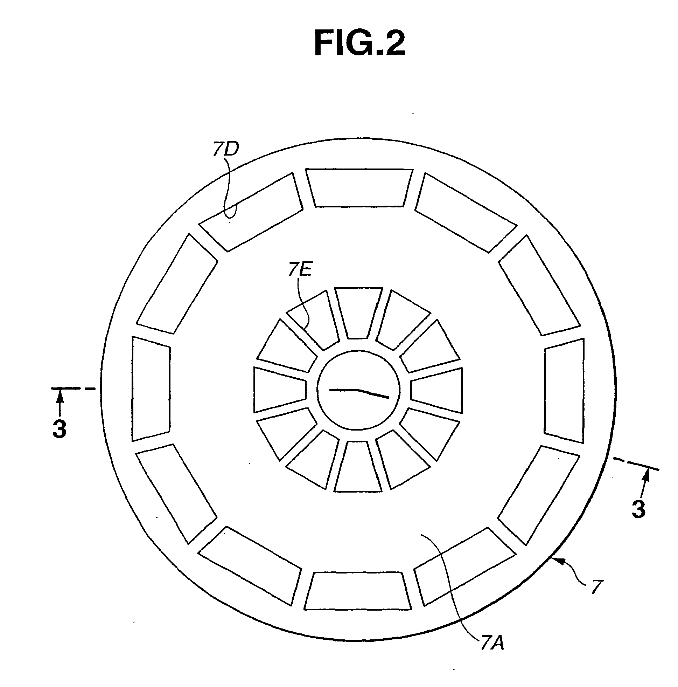

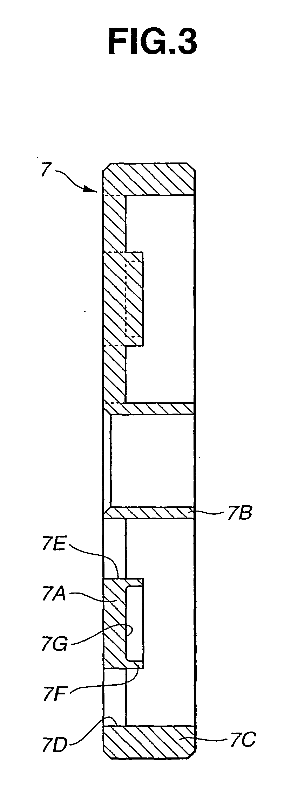

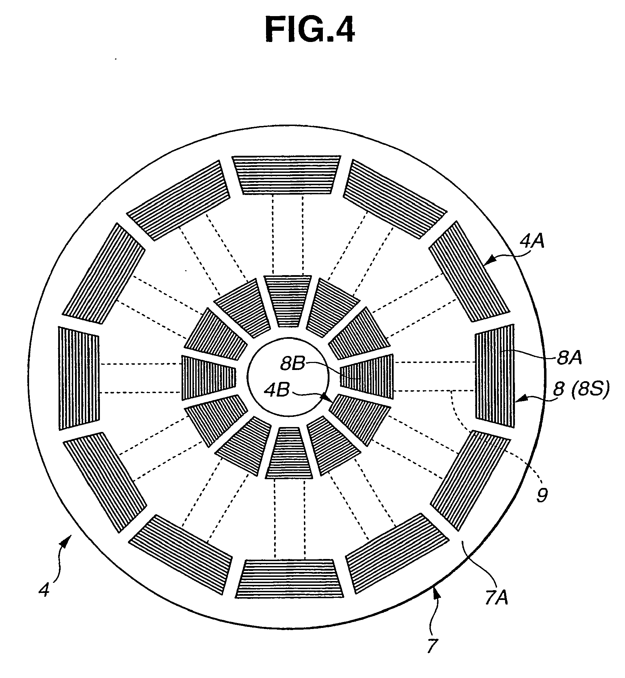

Specifically, stator 4 includes stator bracket 7 and stator body 8 mounted to stator bracket 7. Stator body 8 includes a plurality of stator elements 8S, twelve stator elements in this embodiment, arranged in circumferentially spaced relation as shown in Fig. 4. Stator bracket 7 has a generally annular shape having a double-walled structure. Stator bracket 7 includes radially extending base wall 7A with a central bore, inner circumferential wall 7B axially extending along an inner periphery surrounding the central bore, and outer circumferential wall 7C axially extending along an outer periphery of base wall 7A. As seen from Figs. 2 and 3, base wall 7A has a disk-shape with the central bore. Outer openings 7D and inner openings 7E are formed in an outer circumferential portion of base wall 7A and an inner circumferential portion thereof, respectively. Outer and inner openings 7D and 7E have trapezoidal shapes, respectively. The respective numbers of trapezoidal openings 7D and 7E correspond to the number of the stator elements 8S. Outer openings 7D and inner openings 7E are circumferentially equidistantly arranged in radial alignment. As illustrated in Fig. 3, base wall 7A includes projection 7F axially extending between inner and outer circumferential walls 7B and 7C. Groove 7G as a coil chamber is formed in projection 7F, in which winding 10 wound about each of stator elements 8S is disposed as shown in Fig. 1.

As illustrated in Fig. 1, each of stator elements 8S is in the form of laminated plates made of ferromagnetic material, for example, steel. Stator element 8S has a generally C-shape or an open-ended rectangular shape in section as shown in Fig. 1. Stator element 8S includes bending end portions 8A and 8B which are spaced from each other and extend in one direction, namely, to the right in Fig. 1. Core portion 9 is disposed between bending end portions 8A and 8B and carries winding 10 wound thereon. Bending end portions 8A and 8B are formed by bending longitudinal end portions of the laminated plates in the same direction. Bending end portions 8A and 8B form an outer magnetic pole portion and an inner magnetic pole portion upon stator element 8S being energized through winding 10.

As illustrated in Fig. 4, each of the laminated plates of stator element 8S has a generally I-shape and a length extending in the longitudinal direction and a width extending perpendicular to the longitudinal direction. The width of outer bending end portion 8A is larger than that of inner bending end portion 8B and that of core portion 9. The lengths of bending end portions 8A and 8B extend along axis X of Fig. 1 toward rotors 6 and 5, respectively.

Dimensions of the laminated plates forming bending end portions 8A and 8B and core portion 9 of stator element 8S are designed as follows. As illustrated in Fig. 1, the lengths of the laminated plates, namely, the total lengths of bending end portions 8A and 8B and core portion 9, become gradually large in an axial direction extending from the end cover side toward the casing body side. As illustrated in Fig. 4, the widths of respective bending end portions 8A and 8B gradually increase radially outwardly. In other words, bending end portions 8A and 8B having trapezoidal-shaped cross sections as shown in Fig. 4, have the widths gradually decreasing radially inwardly, respectively. As illustrated in Fig. 1, bending end portions 8A and 8B of the ferromagnetic plates are laminated in the radial direction of stator 4, while core portion 9 of the ferromagnetic plates are laminated in the axial direction of stator 4.

Upon assembling stator 4, stator body 8 is assembled to stator bracket 7. Stator element 8S with winding 10 is fitted into stator bracket 7 in such a manner as to insert outer bending end portion 8A into outer opening 7D and insert inner bending end portion 8B into inner opening 7E from the left side in Fig. 1. Thus, stator 4 is formed as a stator assembly.

As illustrated in Fig. 1, casing body 1 of casing 3 includes end wall 1A with a central bore, and circumferential wall 1D connected with an outer periphery of end wall 1A. Groove 1B as a coil chamber is formed in end wall 1A on one end face thereof, in which winding 10 wound about stator element 8S of stator 4 is disposed. Lead L1 of winding 10 extends in through-hole 1G formed in end wall 1A. Casing body 1 also includes fitting projection 1C onto which stator bracket 7 is fitted. Fitting projection 1C extends from the one end face of end wall 1A toward the inside of casing 3 in the direction of axis X and along an inner periphery surrounding the central bore. Upon mounting stator 4 to casing 3, inner circumferential wall 7B of stator bracket 7 is fitted onto fitting projection 1C. In the fitted state as shown in Fig. 1, stator bracket 7 and casing body 1 are in contact with each other as follows: between an inner surface of inner circumferential wall 7B and an outer surface of fitting projection 1C, between an outer surface of outer circumferential wall 7C and inner surface 1DD of circumferential wall 1D, and between axial end surfaces of inner and outer circumferential walls 7B and 7C and wall surface 1AA of end wall 1A of casing body 1. Stator element 8S is interposed between end wall 1A of casing body 1 and stator bracket 7 and supported thereby in the direction of axis X.

A coolant path supplying coolant for cooling stator 4 is provided. The coolant path includes annular coolant passage 7H circumferentially extending in outer circumferential wall 7C of stator bracket 7, and inlet 1E and outlet 1F which are formed in circumferential wall 1D of casing body 1. Coolant passage 7H is located at substantially an axial-middle portion of outer circumferential wall 7C which is substantially aligned with an axial-middle portion of the outer-most plate of outer bending end portion 8A of stator element 8S. Coolant passage 7H has such a maximum depth as to perform suitable heat exchange with outer and inner bending end portions 8A and 8B without causing deteriorated strength of stator bracket 7. Coolant passage 7H is communicated with inlet 1E and outlet 1F of circumferential wall 1D of casing body 1. Coolant is supplied into coolant passage 7H through inlet 1E and discharged therefrom through outlet 1F as indicated by arrows IN and OUT of Fig. 1.

Disk-shaped first rotor 5 includes annular magnet holder 11 with a plurality of magnets 12, and rotor body 13 to which magnet holder 11 is mounted. Magnets 12 are circumferentially equidistantly arranged and fitted to opening 11A which is formed in magnet holder 11. Magnet holder 11 is fitted to annular recess 13A formed in rotor body 13, and coupled to rotor body 13 by means of bolts 14. Rotor body 13 is integrally formed with first output shaft 15 which is rotatably supported in the central bore of end wall 1A by means of bearing 16. Output shaft 15 also is rotatably supported within boss portion 19B of rotor body 19 of second rotor 6 by means of bearings 17 and 18. Output shaft 15 projects from a central bore of end cover 2 to the outside of casing 3 to thereby derive rotation of output shaft 15. Rotor body 13 is located at substantially an axial-middle portion of output shaft 15. An outer diameter of rotor body 13 is set such that magnet 12 is opposed to an axial end face of inner bending end portion 8B of stator element 8S.

Disk-shaped second rotor 6 includes rotor body 19 and magnet holder 20 mounted to rotor body 19. Rotor body 19 has an outer diameter larger than that of rotor body 13 of rotor 5. Rotor body 19 has recessed portion 19A at a radially inner portion thereof, within which rotor 5 is disposed. A plurality of magnets 21 are circumferentially equidistantly arranged and fitted to opening 20A which is formed in magnet holder 20. The number of N-S pole pairs of rotor 6 is different from that of rotor 5. Magnet holder 20 with magnets 21 is mounted to rotor body 19 and coupled thereto by means of bolts 22. An outer diameter of rotor body 19 is set such that each of magnets 21 is opposed to an axial end face of outer bending end portion 8A of stator element 8S. Boss portion 19B of rotor body 19 is rotatably supported in the central bore of end cover 2 of casing 3 via bearing 23. Boss portion 19B has inner circumferential splined surface 19C adapted to be engaged with a second output shaft, not shown. The second output shaft is introduced from the central bore of end cover 2 into boss portion 19B. With the engagement between splined surface 19C and the second output shaft, rotation of rotor 6 is transmitted to the second output shaft via boss portion 19B.

The electric rotating machine is operated as follows. When compound current is supplied to winding 10 of stator 4 via leads L1, bending end portions 8A and 8B of stator 4 act as the magnetic pole portions between which a magnetic field is generated. The magnetic field influences to magnets 12 and 21 of rotors 5 and 6, so that rotors 5 and 6 are driven, respectively. By regulating the compound current, rotation outputs of rotors 5 and 6 are independently controlled and transmitted to first output shaft 15 integral with rotor 5 and the second output shaft via boss portion 19B of rotor 6.

With the axially opposed arrangement of stator 4 and rotors 5 and 6, the coolant path constituted of coolant passage 7H and inlet 1E and outlet 1F is formed along the circumferential periphery of stator 4 to thereby allow ready access of coolant to stator 4. This provides a simple cooling construction for stator 4 as compared with the cooling construction used in the multi-layer motor of the above-described related art, and serves for improving cooling efficiency of the cooling construction for stator 4 and reducing a production cost of the electric rotating machine. Further, with the axially opposed arrangement, a dimension of stator 4 can be designed without being adversely affected by diameters of rotors 5 and 6. Furthermore, bearings 16, 17 and 18 for supporting stator 4 and rotors 5 and 6 can be reduced in radial size.

Further, with the provision of groove 1B as the coil chamber for winding 10 in end wall 1A of casing body 1 of casing 3, an axial length of groove 1B which extends in the direction of axis X can be readily adjusted corresponding to change in size of winding 10. This allows variation in design of winding 10 for obtaining a desired intensity of an electromagnetic field formed by energizing winding 10.

Further, stator 4 is provided in the form of the stator assembly including stator bracket 7 and stator body 8 mounted to stator bracket 7. With this construction of stator 4, stator bracket 7 can radiate heat in stator body 8 so that the heat radiation property of stator 4 can be improved. Furthermore, even if stator body 8 is constituted of a large number of stator elements 8S, stator 4 can be formed as one unit and then be mounted to casing 3. This serves for improving efficiencies in assembling stator 4 and in mounting stator 4 to casing 3. This also serves for enhancing freedom of design of the stator.

Further, stator body 8 is axially supported by stator bracket 7 and end wall 1A of casing body 1 of casing 3, so that stator body 8 can be prevented from axial displacement due to a reaction force being generated therein. Furthermore, since stator bracket 7 is fitted onto fitting projection 1C of casing body 1, axial and radial positioning of stator 4 can be performed. This serves for improving rigidity of the supporting structure for stator 4.

Further, stator element 8S is formed by a plurality of laminated ferromagnetic plates, and each plate has bending end portions 8A and 8B which extend in the same direction and form the magnetic pole portions upon energizing stator element 8S. Owing to the orientation of bending end portions 8A and 8B, rotors 5 and 6 are arranged on the same side in the axial direction.

Furthermore, there can be provided a simple cooling construction. Namely, the coolant path for cooling stator 4 is constituted by coolant passage 7H formed in outer circumferential wall 7C, and inlet 1E and outlet 1F formed in circumferential wall 1D of casing body 1.

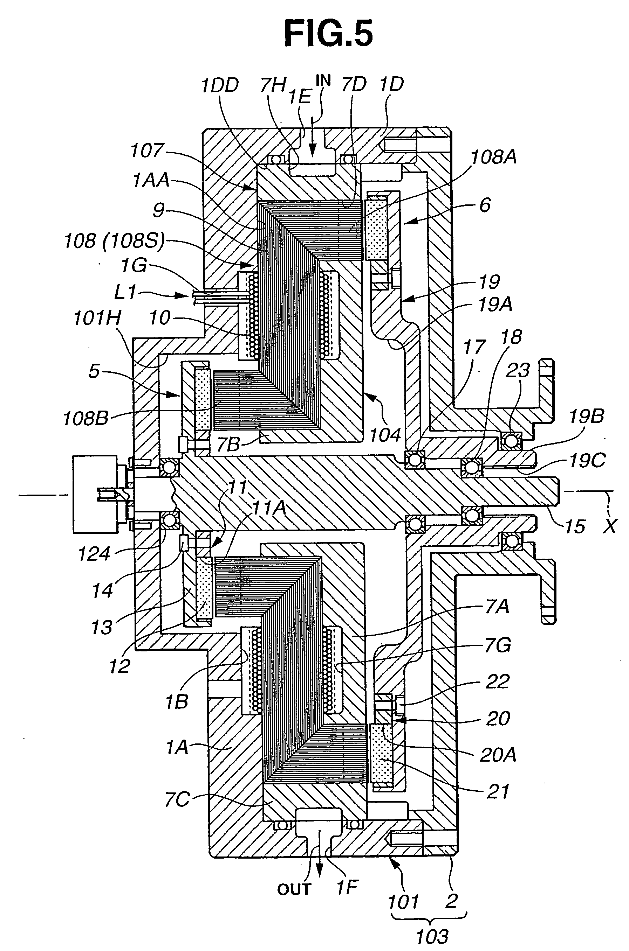

Referring now to Fig. 5, there is shown a second embodiment of the electric rotating machine which differs in arrangement of the two rotors and in construction of the stator and the casing from the first embodiment. Like reference numerals denote like parts, and therefore, detailed explanations therefor are omitted. As illustrated in Fig. 5, stator 104 differs in structure of stator bracket 107 and stator body 108 from stator 4 of the first embodiment. Stator element 108S of stator body 108 is similar to stator element 8S of stator body 8 of the first embodiment except for bending end portions 108A and 108B extending in opposite directions along axis X. Stator bracket 107 is similar to stator bracket 7 of the first embodiment except that base wall 7A has merely outer opening 7D in which outer bending end portion 108A of stator element 108S is disposed. Upon assembling stator 104, stator element 108S with winding 10 is fitted into stator bracket 107 in such a manner as to insert bending end portion 108A into outer opening 7D from the left side in Fig. 5.

Stator 104 is disposed within casing 103 in fitting relation to casing body 101. An outer surface of outer circumferential wall 7C of stator bracket 107 is in contact with inner surface 1DD of circumferential wall 1D of casing body 101. Axial end surfaces of inner and outer circumferential walls 7B and 7C of stator bracket 107 are in contact with wall surface 1AA of end wall 1A of casing body 101. Stator element 108S is interposed between end wall 1A of casing body 1 and stator bracket 107 and supported thereby in the axial direction.

Rotors 5 and 6 are disposed on the axially opposite sides of stator 104. Rotor 5 is formed on an end portion, on the left side as viewed in Fig. 5, of output shaft 15. An outer diameter of rotor body 13 is set such that magnet 12 is opposed to an axial end face of inner bending end portion 108B of stator element 108S. Rotor 6 has substantially the same structure as described in the first embodiment, in which magnet 21 is opposed to an axial end face of outer bending end portion 108A of stator element 108S.

End wall 1A of casing body 101 has rotor chamber 101H within which rotor 5 is disposed. Rotor chamber 101H is defined by a recessed portion of end wall 1A which is recessed from wall surface 1AA toward the outside, namely, to the left side in Fig. 5 in the direction of axis X. Output shaft 15 with rotor 5 is rotatably supported on casing body 101 by means of bearings 124, 17 and 18. Bearing 124 is mounted to a small diameter portion of output shaft 15 which is disposed axially adjacent to rotor body 13 of rotor 5. Bearing 124 is interposed between the small diameter portion of output shaft 15 and a bottom surface of rotor chamber 101H.

The second embodiment of the electric rotating machine is operated in the same manner as described in the first embodiment. The second embodiment of the electric rotating machine can enhance freedom in layout of rotors 5 and 6 in the axial direction and can perform the same effects as explained in the first embodiment.

## Claims

1. An electric rotating machine, comprising:
a first rotor (5) including a first magnet (12);
a second rotor (6) disposed concentrically with the first rotor (5), so that the rotors (5, 6) define a common axis (X), the second rotor (6) including a second magnet (21) radially offset from the first magnet (12); and
a stator (4, 104) disposed concentrically with the first and second rotors (5, 6), the stator (4, 104) comprising a radially outer portion (4A) and a radially inner portion (4B), wherein
the radially outer portion (4A) is axially opposed to the magnet of one of the rotors (5, 6) and the radially inner portion (4B) is axially opposed to the magnet of the other of the rotors (5, 6),
**characterized in that**
end portions (8A, 8B, 108A, 108B) of ferromagnetic material are disposed at the radially outer portion (4A) and the radially inner portion (4B) of the stator (4, 104), respectively, the end portions (8A, (B, 108A, 108B) are bent with regard to a core portion (9) disposed therebetween, so as to extend along the common axis (X) towards the rotors (5, 6), respectively, and the end portions (8A, 8B, 108A, 108B) are spaced from each other by the core portion (9) which carries a winding (10) wound thereon.

2. An electric rotating machine, according to claim 1, **characterized in that** the rotors (5, 6) are disk-shaped and are arranged in concentric relation to each other within a casing (3).

3. An electric rotating machine according to claim 2, **characterized in that** the casing (3) comprises an end wall (1A) supporting the stator (4, 104) thereon, the end wall (1A) being formed with a first groove (1B), the winding (10) being disposed in the first groove (1B).

4. An electric rotating machine according at least one of claims 1 to 3, **characterized in that** the stator (4, 104) comprises a stator bracket (7, 107) and a stator body (8, 108) mounted to the stator bracket (7, 107), the winding (10) being wound on the core portions (9) of the stator body (8, 108).

5. An electric rotating machine according to claim 4, **characterized in that** the stator body (8, 108) comprises a plurality of stator elements (8S, 108S) arranged in circumferentially spaced relation.

6. An electric rotating machine according to claim 5, **characterized in that** each of the stator elements (8S, 108S) is in the form of laminated plates, each of the laminated plates comprising the end portions (8A, 8B, 108A, 108B) and the core portion (9).

7. An electric rotating machine according to at least one of claims 1 to 6, **characterized in that** the end portions (8A, 8B, 108A, 108B) are bent in the same direction.

8. An electric rotating machine according at least one of claims 1 to 6, **characterized in that** the end portions (8A, 8B, 108A, 108B) are bent in opposite directions.

9. An electric rotating machine according to at least one of claims 1 to 8, **characterized in that** the end portions (8A, 8B, 108A, 108B) have a width extending perpendicular to a longitudinal direction thereof, the width of the bending end portions (8A, 8B, 108A, 108B) gradually increasing radially outwardly.

10. An electric rotating machine according to at least one of claims 4 to 9, **characterized in that** the end portions (8A, 8B, 108A, 108B) form magnetic pole portions upon the stator body (8, 108) being energized via the winding (10).

11. An electric rotating machine according to claim 10, **characterized in that** the stator bracket (7, 107) comprises a disk-shaped base wall (7A) formed with first openings (7D) and second openings (7E), the first openings (7D) and the second openings (7E) being disposed on a radial outer periphery of the base wall (7A) and a radial inner periphery thereof, respectively, the first openings (7D) and the second openings (7E) being arranged in circumferentially spaced relation, one of the end portions (8A, 8B, 108A, 108B) being fitted to the first openings (7D), the other of the end portions (8A, 8b, 108A, 108B) being fitted to the second openings (7E).

12. An electric rotating machine according to claim 11, **characterized in that** the base wall (7A) of the stator bracket (7, 107) comprises a second groove (7G) in which the winding (10) is disposed.

13. An electric rotating machine according to at least one of claims 4 to 13, **characterized in that** a plurality of stator elements (8S, 108S) are interposed between the stator bracket (7, 107) and the end wall (1A) of the casing (3) and supported thereby in the axial direction of the stator bracket (7, 107), the stator bracket (7, 107) being fitted to the casing (3).

14. An electric rotating machine according to claim 13, **characterized in that** the end wall (1A) of the casing (3) comprises a fitting projection (1C) extending therefrom along the axial direction of the stator bracket (7, 107), the stator bracket (7, 107) comprising an inner circumferential wall (7B) fitted onto the fitting projection (1C).

15. An electric rotating machine according to at least one of claims 4 to 14, **characterized in that** the casing (3) comprises a circumferential wall (1 D), the stator bracket (7, 107) comprising an outer circumferential wall (7C) contacted with the circumferential wall (1 D) of the casing (3), the outer circumferential wall (7C) being formed with a coolant passage (7H) adapted to pass a coolant therethrough.

16. An electric rotating machine according to claim 15, **characterized in that** the circumferential wall (1 D) of the casing (3) is formed with an inlet (1E) and an outlet (1F) which are communicated with the coolant passage (7H) of the stator bracket (7, 107).

17. An electric rotating machine according to at least one of claims 1 to 16, **characterized in that** one of the rotors (5, 6) is formed with a recessed portion (19A) within which the other of the rotors (5, 6) is disposed.

18. An electric rotating machine according to claim 7, **characterized in that** the rotors (5, 6) are disposed axially on one side of the stator (4, 104).

19. An electric rotating machine according to claim 8, **characterized in that** the rotors (5, 6) are disposed on axially opposite sides of the stator (4, 104).

20. An electric rotating machine according to at least one of claims 1 to 19, **characterized in that** the stator (4, 104) is adapted to be supplied with compound current.

## Patentansprüche

1. Rotierende elektrische Maschine, die umfasst:
einen ersten Rotor (5), der einen ersten Magneten (12) enthält;
einen zweiten Rotor (6), der konzentrisch zu dem ersten Rotor (5) angeordnet ist, so dass die Rotoren (5, 6) eine gemeinsame Achse (X) bilden, wobei der zweite Rotor (6) einen zweiten Magneten (21) enthält, der zu dem ersten Magneten (12) radial versetzt ist; und
einen Stator (4, 104), der konzentrisch zu dem ersten und dem zweiten Rotor (5, 6) angeordnet ist, wobei der Stator (4,104) einen radial außen liegenden Abschnitt (4A) und einen radial innen liegenden Abschnitt (4B) umfasst, wobei
der radial außen liegende Abschnitt (4A) dem Magneten eines der Rotoren (5, 6) axial gegenüber liegt und der radial innen liegende Abschnitt (4B) dem Magneten des anderen der Rotoren (5, 6) axial gegenüber liegt,
**dadurch gekennzeichnet, dass**
Endabschnitte (8A, 8B, 108A, 108B) aus ferromagnetischem Material an dem radial außen liegenden Abschnitt (4A) bzw. dem radial innen liegenden Abschnitt (4B) des Stators (4, 104) angeordnet sind, wobei die Endabschnitte (8A, 8B, 108A, 108B) in Bezug auf einen dazwischen angeordneten Kernabschnitt (9) so gebogen sind, dass sie sich entlang der gemeinsamen Achse (X) jeweils auf die Rotoren (5, 6) zu erstrecken, und die Endabschnitte (8A, 108A, 108B) voneinander durch den Kernabschnitt (9) beabstandet sind, der eine darauf gewickelte Wicklung (10) trägt.

2. Rotierende elektrische Maschine nach Anspruch 1, **dadurch gekennzeichnet, dass** die Rotoren (5, 6) scheibenförmig und in konzentrischer Beziehung zueinander in einem Gehäuse (3) angeordnet sind.

3. Rotierende elektrische Maschine nach Anspruch 2, **dadurch gekennzeichnet, dass** das Gehäuse (3) eine Abschlusswand (1A) umfasst, die den Stator (4, 4A) daran trägt, wobei die Abschlusswand (1A) mit einer ersten Nut (1 B) versehen ist und die Wicklung (10) in der ersten Nut (1 B) angeordnet ist.

4. Rotierende elektrische Maschine nach wenigstens einem der Ansprüche 1 bis 3, **dadurch gekennzeichnet, dass** der Stator (4, 104) einen Statorträger (7, 107) und einen Statorkörper (8, 108) umfasst, der an dem Statorträger (7, 107) angebracht ist, wobei die Wicklung (10) auf die Kernabschnitte (9) des Statorkörpers (8, 108) gewickelt ist.

5. Rotierende elektrische Maschine nach Anspruch 4, **dadurch gekennzeichnet, dass** der Statorkörper (8, 108) eine Vielzahl von Statorelementen (8S, 108S) umfasst, die in in Umfangsrichtung beabstandeter Beziehung angeordnet sind.

6. Rotierende elektrische Maschine nach Anspruch 5, **dadurch gekennzeichnet, dass** jedes der Statorelemente (8S, 108S) die Form laminierter Platten hat, wobei jede der laminierten Platten die Endabschnitte (8A, 8B, 108A, 108B) und den Kernabschnitt (9) umfasst.

7. Rotierende elektrische Maschine nach wenigstens einem der Ansprüche 1 bis 6, **dadurch gekennzeichnet, dass** die Endabschnitte (8A, 8B, 108A, 108B) in der gleichen Richtung gebogen sind.

8. Rotierende elektrische Maschine nach wenigstens einem der Ansprüche 1 bis 6, **dadurch gekennzeichnet, dass** die Endabschnitte (8A, 8B, 108A, 108B) in einander entgegengesetzten Richtungen gebogen sind.

9. Rotierende elektrische Maschine nach wenigstens einem der Ansprüche 1 bis 8, **dadurch gekennzeichnet, dass** die Endabschnitte (8A, 8B, 108A, 108B) eine Breite haben, die sich senkrecht zu einer Längsrichtung desselben erstreckt, wobei die Breite der gebogenen Endabschnitte (8A, 8B, 108A, 108B) radial nach außen allmählich zunimmt.

10. Rotierende elektrische Maschine nach wenigstens einem der Ansprüche 4 bis 9, **dadurch gekennzeichnet, dass** die Endabschnitte (8A, 8B, 108A, 108B) magnetische Polabschnitte an dem Statorkörper (8, 108) bilden, die über die Wicklung (10) erregt werden.

11. Rotierende elektrische Maschine nach Anspruch 10, **dadurch gekennzeichnet, dass** der Statorträger (7, 107) eine scheibenförmige Grundwand (7A) umfasst, die mit ersten Öffnungen (7D) und zweiten Öffnungen (7E) versehen ist, wobei die ersten Öffnungen (7D) und die zweiten Öffnungen (7E) an einem radialen Außenumfang der Grundwand (7A) bzw. einem radialen Innenumfang derselben angeordnet sind, die ersten Öffnungen (7D) und die zweiten Öffnungen (7E) in in Umfangsrichtung beabstandeter Beziehung angeordnet sind, einer der Endabschnitte (8A, 8B, 108A, 108B) in die ersten Öffnungen (7D) eingepasst ist und der andere der Endabschnitte (8A, 8B, 108A, 108B) in die zweiten Öffnungen (7E) eingepasst ist.

12. Rotierende elektrische Maschine nach Anspruch 11, **dadurch gekennzeichnet, dass** die Grundwand (7A) des Statorträgers (7, 107) eine zweite Nut (7G) umfasst, in der die Wicklung (10) angeordnet ist.

13. Rotierende elektrische Maschine nach wenigstens einem der Ansprüche 4 bis 13, **dadurch gekennzeichnet, dass** eine Vielzahl von Statorelementen (8S, 108S) zwischen dem Statorträger (7, 107) und der Abschlusswand (1A) des Gehäuses (3) angeordnet sind und davon in der axialen Richtung des Statorträgers (7, 107) getragen werden, wobei der Statorträger (7, 107) an das Gehäuse (3) gepasst ist.

14. Rotierende elektrische Maschine nach Anspruch 13, **dadurch gekennzeichnet, dass** die Abschlusswand (1A) des Gehäuses (3) einen Passvorsprung (1C) umfasst, der sich von ihr aus entlang der axialen Richtung des Statorträgers (7, 107) erstreckt, wobei der Statorträger (7, 107) eine Innenumfangswand (7B) umfasst, die auf den Passvorsprung (1 C) aufgepasst ist.

15. Rotierende elektrische Maschine nach wenigstens einem der Ansprüche 4 bis 14, **dadurch gekennzeichnet, dass** das Gehäuse (3) eine Umfangswand (1 D) umfasst, der Statorträger (7, 107) eine Außenumfangswand (7C) umfasst, die mit der Umfangswand (1 D) des Gehäuses (3) in Kontakt ist, wobei die Außenumfangswand (7C) mit einem Kühlmitteldurchlass (7H) versehen ist, der ein Kühlmittel hindurch lässt.

16. Rotierende elektrische Maschine nach Anspruch 15, **dadurch gekennzeichnet, dass** die Umfangswand (1 D) des Gehäuses (3) mit einem Einlass (1 E) und einem Auslass (1 F) versehen ist, die mit dem Kühlmitteldurchlass (7H) des Statorträgers (7, 107) in Verbindung stehen.

17. Rotierende elektrische Maschine nach wenigstens einem der Ansprüche 1 bis 16, **dadurch gekennzeichnet, dass** einer der Rotoren (5, 6) mit einem vertieften Abschnitt (19A) versehen ist, in dem der andere der Rotoren (5, 6) angeordnet ist.

18. Rotierende elektrische Maschine nach Anspruch 7, **dadurch gekennzeichnet, dass** die Rotoren (5, 6) axial an einer Seite des Stators (4, 104) angeordnet sind.

19. Rotierende elektrische Maschine nach Anspruch 8, **dadurch gekennzeichnet, dass** die Rotoren (5, 6) an axial einander gegenüberliegenden Seiten des Stators (4, 104) angeordnet sind.

20. Rotierende elektrische Maschine nach wenigstens einem der Ansprüche 1 bis 19, **dadurch gekennzeichnet, dass** der Stator (4, 104) so eingerichtet ist, dass er mit zusammengesetztem Strom (compund current) gespeist wird.

## Revendications

1. Machine électrique rotative, comprenant :
un premier rotor (5) incluant un premier aimant (12) ;
un second rotor (6) disposé concentriquement au premier rotor (5) de sorte que les rotors (5, 6) définissent un axe commun (X), le second rotor (6) comprenant un second aimant. (21) radialement décalé _du premier aimant (12) ; et
un stator (4, 104) disposé concentriquement au premier et second rotors (5, 6), le stator (4, 104) comprenant une portion radialement extérieure (4A) et une portion radialement intérieure (4B), où la portion radialement extérieure (4A) est opposée axialement à l'aimant d'un des rotors (5, 6) et la portion radialement intérieure (4B) est axialement opposée à l'aimant de l'autre des rotors (5, 6),
**caractérisée en ce que** des portions d'extrémité (8A, 8B, 108A, 108B) en matériau ferromagnétique sont disposées à la portion radialement extérieure (4A) et à la portion radialement intérieure (4A) du stator (4, 104), respectivement, les portions d'extrémité (8A, 8B, 108A, 108B) sont pliées par rapport à une portion de noyau (5) disposée entre elles de manière à s'étendre le long de l'axe commun (X) vers les rotors (5, 6) respectivement, et les portions d'extrémité (8A, 8B, 108A, 108B) sont espacées les unes des autres par la portion de noyau (9) qui porte un enroulement (10) enroulé sur celle-ci.

2. Machine électrique rotative selon la revendication 1, **caractérisée en ce que** les rotors (5, 6) sont en forme de disque et sont agencés selon une relation concentrique l'un à l'autre dans un boîtier (3).

3. Machine électrique rotative selon la revendication 2, **caractérisée en ce que** le boîtier (3) comprend une paroi d'extrémité (1A) supportant le stator (4, 104) sur celle-ci, la paroi d'extrémité (1A) présentant une première rainure (1B), l'enroulement (10) étant disposé dans la première rainure (1B).

4. Machine électrique rotative selon au moins l'une des revendications 1 à 3, **caractérisée en ce que** le stator (4, 104) comprend un support de stator (7, 107) et un corps de stator (8, 108) monté sur le support de stator (7, 107), l'enroulement (10) étant enroulé sur les portions de noyau (9) du corps de stator (8, 108).

5. Machine électrique rotative selon la revendication 4, **caractérisée en ce que** le corps de stator (8, 108) comprend plusieurs éléments statoriques (8S, 108S) agencés selon une relation espacée circonférentiellement.

6. Machine électrique rotative selon la revendication 5, **caractérisée en ce que** chacun des éléments statoriques (8S, 108S) se présente sous la forme de plaques laminées, chacune des plaques laminées comprenant les portions d'extrémité (8A, 8B, 108A, 108B) et la portion de noyau (9) .

7. Machine électrique rotative selon au moins l'une des revendications 1 à 6, **caractérisée en ce que** les portions d'extrémité (8A, 8B, 108A, 108B) sont pliées dans la même direction.

8. Machine électrique rotative selon au moins l'une des revendications 1 à 6, **caractérisée en ce que** les portions d'extrémité (8A, 8B, 108A, 108B) sont courbées dans des directions opposées.

9. Machine électrique rotative selon au moins l'une des revendications 1 à 8, **caractérisée en ce que** les portions d'extrémité (8A, 8B, 108A, 108B) ont une largeur s'étendant perpendiculairement à leur direction longitudinale, la largeur des portions d'extrémité de pliage (8A, 8B, 108A, 108B) augmentant progressivement radialement vers l'extérieur.

10. Machine électrique rotative selon au moins l'une des revendications 4 à 9, **caractérisée en ce que** les portions d'extrémité (8A, 8B, 108A, 108B) forment des portions de pôle magnétiques sur le corps de stator (8, 108) qui sont excitées par l'enroulement (10).

11. Machine électrique rotative selon la revendication 10, **caractérisée en ce que** le support de stator (7, 107) comprend une paroi de base en forme de disque (7A) présentant de premières ouvertures (7D) et de secondes ouvertures (7E), les premières ouvertures (7D) et les secondes ouvertures (7E) étant disposées sur une périphérie radialement extérieure de la paroi de base (7A) et sa périphérie radiale intérieure, respectivement, les premières ouvertures (7D) et les secondes ouvertures (7E) étant agencées selon une relation circonférentiellement espacée, l'une des portions d'extrémité (8A, 8B, 108A, 108B) étant insérée dans les premières ouvertures (7D), l'autre des portions d'extrémité (8A, 8B, 108A, 108B) étant insérée dans les secondes ouvertures (7E).

12. Machine électrique rotative selon la revendication 11, **caractérisée en ce que** la paroi de base (7A) du support de stator (7, 107) comprend une seconde rainure (7G) dans laquelle l'enroulement (10) est disposé.

13. Machine électrique rotative selon au moins l'une des revendications 4 à 13, **caractérisée en ce que** plusieurs éléments statoriques (8S, 108S) sont interposés entre le support de stator (7, 107) et la paroi d'extrémité (1A) du boîtier (3) et sont ainsi supportés dans la direction axiale du support de stator (7, 107, le support de stator (7, 107) étant monté sur le boîtier (3).

14. Machine électrique rotative selon la revendication 13, **caractérisée en ce que** la paroi d'extrémité (1A) du boîtier (3) comprend une saillie d'insertion (1C) s'étendant de celle-ci dans la direction axiale du support de stator (7, 107), le support de stator (7, 107) comprenant une paroi circonférentielle intérieure (7B) montée sur la saillie d'insertion (1C).

15. Machine électrique rotative selon au moins l'une des revendications 4 à 14, **caractérisée en ce que** le boîtier (3) comprend une paroi circonférentielle (1D), le support de stator (7, 107) comprenant une paroi circonférentielle extérieure (7C) en contact avec la paroi circonférentielle (1D) du boîtier (3), la paroi circonférentielle extérieure (7C) présentant un passage d'agent de refroidissement (7H) apte à faire passer un agent de refroidissement à travers celui-ci.

16. Machine électrique rotative selon la revendication 15, **caractérisée en ce que** la paroi circonférentielle (1D) du boîtier (3) présente une entrée (1E) et une sortie (1F) qui communiquent avec le passage d'agent de refroidissement (7H) du support de stator (7, 107).

17. Machine électrique rotative selon au moins l'une des revendications 1 à 16, **caractérisée en ce que** l'un des rotors (5, 6) présente une portion évidée (19A) dans laquelle l'autre des rotors (5, 6) est disposé.

18. Machine électrique rotative selon la revendication 7, **caractérisée en ce que** les rotors (5, 6) sont disposés axialement sur un côté du stator (4, 104).

19. Machine électrique rotative selon la revendication 8, **caractérisée en ce que** les rotors (5, 6) sont disposés sur des côtés axialement opposés du stator (4, 104).

20. Machine électrique rotative selon au moins l'une des revendications 1 à 19, **caractérisée en ce que** le stator (4, 104) est conçu pour être alimenté en courant composé.
